Europäisches Patentamt

European Patent Office

Office européen des brevets

(11) Publication number: **0 411 879 A2**

# EUROPEAN PATENT APPLICATION

(21) Application number: 90308370.7

(51) Int. Cl.5: **B60J 3/04**

(22) Date of filing: 30.07.90

(30) Priority: 31.07.89 JP 198250/89

(43) Date of publication of application:
06.02.91 Bulletin 91/06

(84) Designated Contracting States:
DE FR GB

(71) Applicant: NISSAN MOTOR CO., LTD.
No.2, Takara-cho, Kanagawa-ku
Yokohama City(JP)

(72) Inventor: Ohashi, Toshio
145-32 Tomuro
Atsugi City(JP)
Inventor: Ono, Hitoshi
No. 2-20-505 Satsuki-cho
Ebina City(JP)
Inventor: Serizawa, Hiromichi
Sagami-ryo A-520
No. 3-4688-1 Sobudai, Zama City(JP)

(74) Representative: Godwin, Edgar James et al
MARKS & CLERK 57-60 Lincoln's Inn
Fieldslds
London, WC2A 3LS(GB)

(54) Controlling system for automotive vehicle window glass transmissivity.

(57) The transmissivity is changed in accordance with outside air temperature and passenger room temperature. The system operates under a parking condition of the vehicle, thus controlling the amount of solar energy entering the passenger room through the window glass when the vehicle is parked. A sensor (12) senses the outside air temperature, $T_A$, and a sensor (14) senses the room air temperature, Ti. A comfort zone for the room air temperature is set (at 19a) in accordance with $T_A$. Ti is compared with the comfort zone (at 10b). The transmissivity of the window glass (2,4,6,8) is controlled (at 19c) in accordance with the comparison (at 19b) when the ignition switch is off.

FIG.1

# CONTROLLING SYSTEM FOR AUTOMOTIVE VEHICLE WINDOW GLASS TRANSMISSIVITY

The present invention relates to a controlling system of transmissivity of a window glass, and more particularly to the controlling system which improves the amenity of a vehicular passenger room during parking of an automotive vehicle.

Hitherto an automotive vehicle has a front window glass, a rear window glass and a pair of side window glasses whose transmissivity are constant. The transmissivity is set at a high value so that visibility through the window glasses is good under a driving condition.

With such an arrangement, in case that a passenger rides in a parked automotive vehicle, amenity in a passenger room of the automotive vehicle has been improved in winter since a passenger room air temperature is raised by the solar energy through the window glasses. However, in summer, the amenity in the passenger room has been degraded since the passenger room air temperature is raised over a comfortable temperature so that an instrument cluster and seats are overheated by the solar energy through the window glasses. This overheating further causes the degradation of a cooling down performance of an air conditioner.

A control system of transmissivity of a window glass has been proposed and is disclosed, for example, in Japanese Utility Model Provisional Publication No. 60-168209. With this system, the transmissivity of the vehicular window glass is controllably changed in accordance with driving speeds of the automotive vehicle so that the visibility is good under a driving condition. However, with this system, since the transmissivity of the window glasses is always set at a low value during parking of the automotive vehicle, the amenity in the passenger room has been degraded in winter when a passenger rides in the parked automotive vehicle.

## SUMMARY OF THE INVENTION

It is an object of the present invention to provide the controlling system of a window glass transmissivity with which amenity in the passenger room is largely improved when a passenger rides in a parked automotive vehicle.

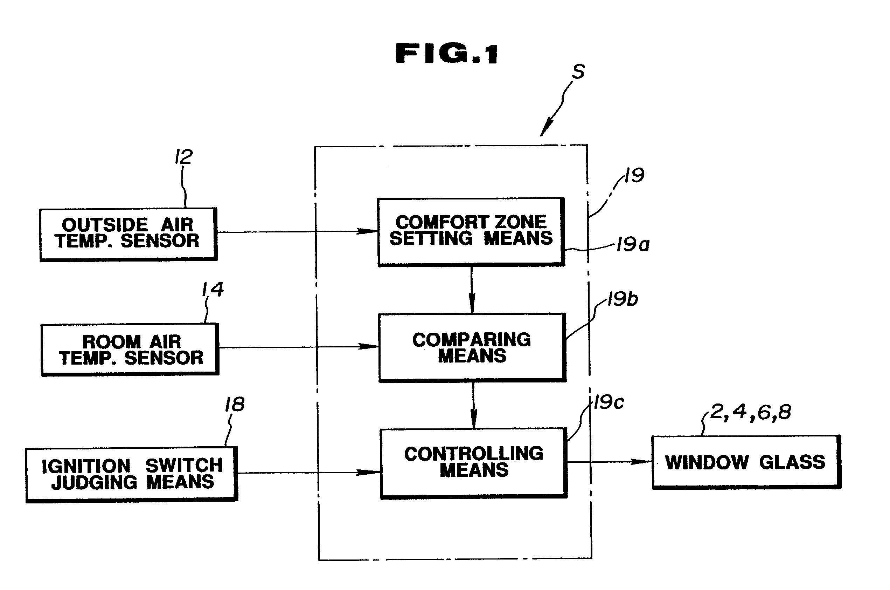

As shown in Fig. 1, according to the present invention, a system S is provided to control transmissivity of a window glass for an automotive vehicle, in which the window glass has a variable transmissivity. The system S comprises an outside air temperature sensor 12 for detecting first air temperature outside the automotive vehicle. A room air temperature sensor 14 detects a second air temperature within a passenger room of the automotive vehicle. Judging means 18 judges that an ignition switch of the automotive vehicle is turned OFF. Setting means 19a sets a comfort zone in accordance with the first air temperature. Comparing means 19b compares the second temperature with the comfort zone. Controlling means 19c controls the transmissivity of the window glass in accordance with the comparing of the comparing means when the judging means senses the ignition switch being turned OFF.

With this arrangement, since the solar energy is controllably received in the passenger room, amenity in the passenger room of the parked automotive vehicle is largely improved throughout all four seasons.

## BRIEF DESCRIPTION OF THE DRAWINGS

Fig. 1 is a block diagram showing the principle of a controlling system of transmissivity of a window glass according to the present invention;

Fig. 2 is a front perspective view of an automotive vehicle having the controlling system according to the present invention;

Fig. 3 is a rear perspective view of the automotive vehicle of Fig. 2;

Fig. 4 is a cross-sectional view of a typical glass used in the automotive vehicle having the controlling system according to the present invention;

Fig. 5 is a flowchart showing a program of the system according to the present invention;

Fig. 6 is a graph showing the ranges of a summer mode and a winter mode which are defined by a°C of the outside air temperature;

Fig. 7 is a graph showing a comfort zone in the summer mode being within the range from B°C to A°C;

Fig. 8 is a graph showing a comfort zone in the winter mode being within the range from D°C to C°C; and

Fig. 9 is a graph showing the difference of a cooling down performance between a case according to the present invention and a case of a conventional type.

## DETAILED DESCRIPTION

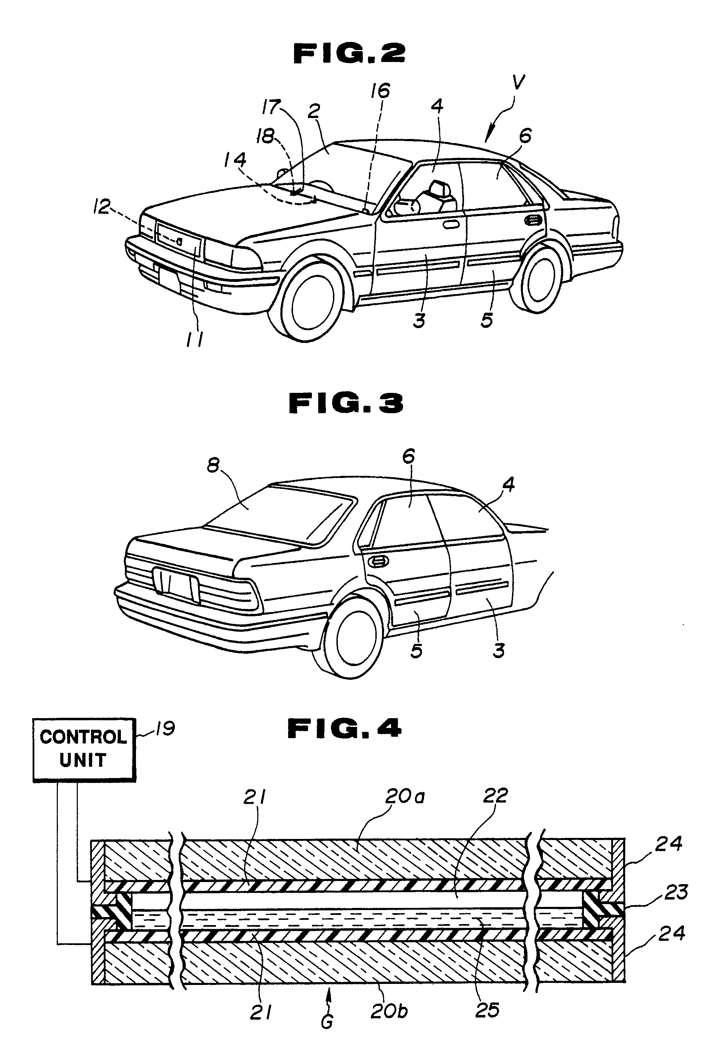

Referring now to Figs. 2 and 3, an automotive vehicle V is provided with a front window glass 2, door window glasses 4 of both front side doors 5, door window glasses 6 of both rear side doors 7, and a rear window glass 8. The window glasses 2, 4, 6, 8 are changeable in transmissivity $\phi$. The automotive vehicle V includes a system S for controlling the transmissivity of each window glass 2, 4, 6, 8.

An outside air temperature sensor 12 forming part of the system S is disposed at a hood lock stay (not shown) located at the backside of a front grill 11 and detects an outside air temperature $T_A$. A room air temperature sensor 14 forming part of the system S is disposed at one side of an instrument cluster (not identified) in a passenger room and detects a room air temperature Ti. A solar energy sensor 16 forming part of the system S is disposed at an end section of a defroster grill (not identified) and measures a solar radiation amount (quantity of heat (kcal/h)) Qs. An ignition switch position sensor 18 is disposed at an ignition key cylinder (not shown) and detects a position of an ignition switch 17.

As schematically shown in Fig. 1, a control unit 19 is provided to be electrically connected with the outside air temperature sensor 12, the room air temperature sensor 14, the solar energy sensor 16, the ignition switch position sensor 18, the front window glass 2, the door window glasses 4, 6 and the rear window glass 8 in a manner that the transmissivity $\phi$ of the window glasses 2, 4, 6, 8 is controllable.

In this embodiment, each of the above-mentioned glasses 2, 4, 6, 8 is formed of a glass unit G shown in Fig. 4. The glass unit G includes a pair of plate glasses 20a, 20b which are oppositely located to form a predetermined clearance. A transparent conductive film 21 is attached on the inside surface of each plate glass 20a, 20b. An electrochromic film 22 is further attached on the transparent conductive film 21 of the plate glass 20a. The clearance between the plate glasses 20a, 20b is filled with electrolyte 25 which is ion-conductive and electron-nonconductive and is sealed with sealing members 23. A periphery of each transparent conductive film 21 is contacted with a conductive member 24 which is connected to the control unit 19 so that an electrical signal is supplied to the electrochromic film 22 through the conductive member 24 and the transparent conductive film 21.

In this glass unit G, the transmissivity changing is carried out under the electrochromic phenomena in which the electrochromic film 22 is colored by being supplied with the electrical signal or direct electric current, and is discolored by being supplied with the electrical signal or the direct electric current in the reverse direction. An example of such a glass unit G disclosed in a technical publication "NIKKEI NEW MATERIALS", published on January 13, 1986 in Japan.

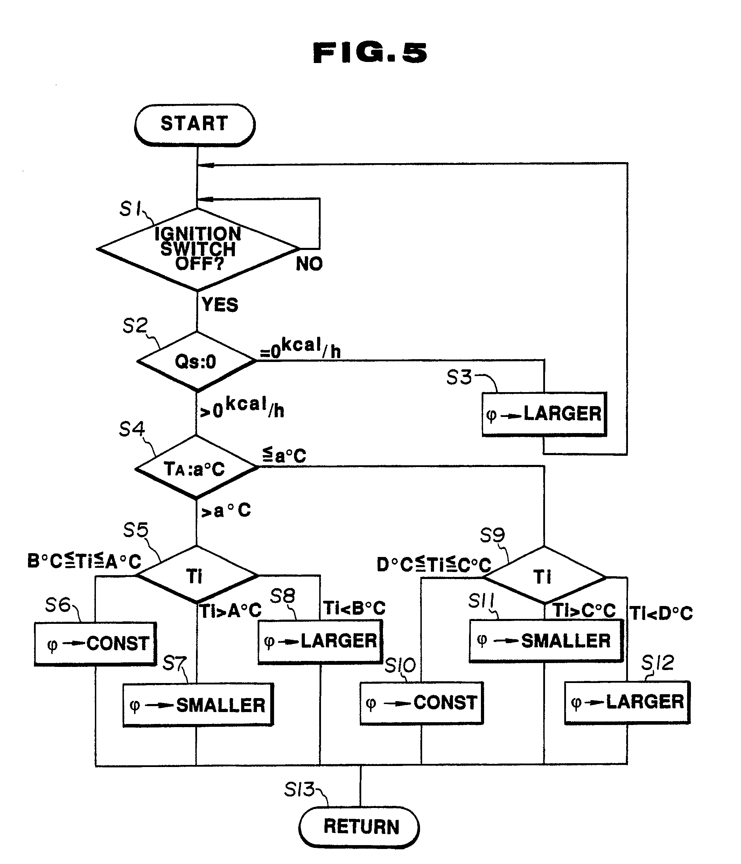

The manner of operation of the thus arranged controlling system S will be discussed hereinafter with reference to a flowchart of Fig. 5.

When it is judged in a step S1 that the ignition switch is turned OFF, the flow goes to a step S2 in which the judgement is made as to be judged whether the solar radiation amount Qs is larger than 0 kcal/h or kJ/h. During the night, in which the solar radiation amount Qs becomes 0 kcal/h, the transmissivity $\phi$ of each window glass 2, 4, 6, 8 is increased in a step S3. During the day in which the solar radiation amount Qs becomes larger than 0 kcal/h, in a step 4, the outside air temperature $T_A$ is compared with a predetermined temperature a°C and to be judged whether it is in a summer mode or in a winter mode at this time.

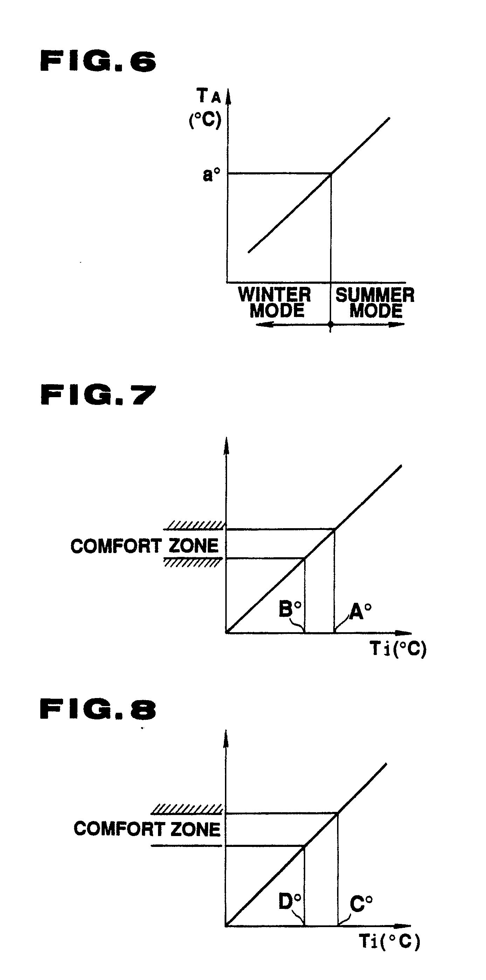

As shown in Fig. 6, when the outside air temperature $T_A$ is higher than a predetermined temperature a°C, the summer mode is used in this case. Further, when the outside air temperature $T_A$ is not higher than the predetermined temperature a°C, the winter mode is used in this case. The predetermined temperature a°C is set at an appropriate level according to circumstances.

As shown in Fig. 7, a comfort zone in the summer mode is predetermined so that the room air temperature Ti is within the range from B°C to A°C.

As shown in Fig. 8, a comfort zone in the winter mode is predetermined so that the room air temperature Ti is within the range from D°C to C°C.

In the step S4, when it is judged that the outside air temperature $T_A$ is in the summer mode, the flow goes to a step S5 in which the judgement is made as to whether or not the room air temperature Ti is within the comfort zone in the summer mode. When it is judged in the step S5 that the room air temperature Ti is not lower than B°C and not higher than A°C, the transmissivity $\phi$ is maintained as it is in a step S6. When it is judged in the step S5 that the room air temperature Ti is lower than B°C, the transmissivity $\phi$ is increased in a step S8.

In the step S4, when it is judged that the outside air temperature $T_A$ is in the winter mode, the flow goes to a step S9 in which the judgement is made as to whether or not the room air temperature Ti is within the comfort zone in the winter mode. When it is judged in the step S9 that the room air temperature Ti is not lower than D°C and not higher than C°C, the transmissivity $\phi$ is maintained as it is in a step S10. When it is judged in the step S9 that the room temperature Ti is higher than C°C. The transmissivity $\phi$ is decreased in a step S11. When it is judged in the step S9 that the room air temperature Ti is lower than D°C, the transmissivity $\phi$ is increased in a step S12.

When it is judged in a step S1 that the ignition switch is not turned OFF, the program repeats the judgement in the step S1.

When each of the step S6 to S8 and S10 to S12 proceeds to a step S13, the program returns to the step S1.

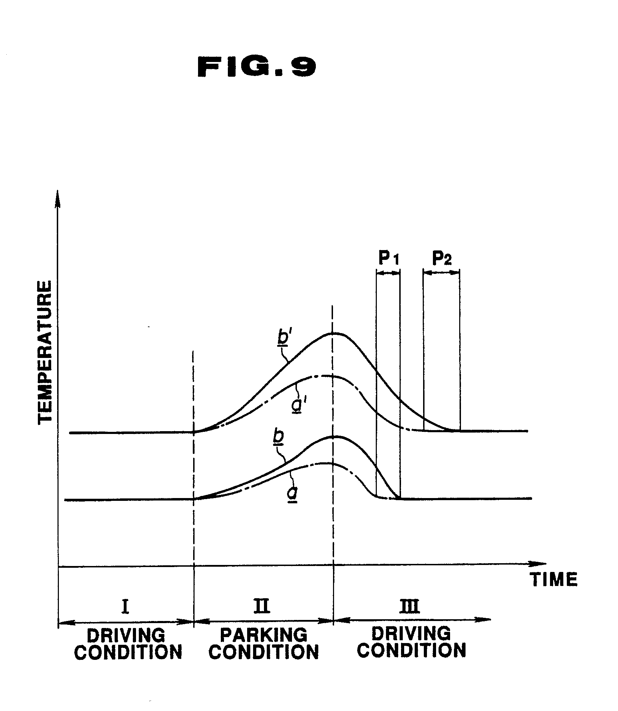

A graph of Fig. 9 shows the difference of the cooling down performance between a first automotive vehicle having the controlling system according to the present invention and a second automotive having no such controlling system so that window glasses are unchangeable in transmissivity, when the automotive vehicles are parked under the solar energy radiation. In the graph, a line a represents a continuous change of the room air temperature in the first automotive vehicle in case that the first and second automotive vehicles are under a driving condition I, a parking condition II and a driving condition III which are successive. Similarly, a line b is a continuous change of the room air temperature in the second automotive vehicle under the above-mentioned successive conditions. A line a′ represents a continuous change of a temperature of the instrument cluster in the second automotive vehicle under the above-mentioned conditions. A line b′ represents a continuous change of the instrument cluster temperature in the second automotive vehicle under the above-mentioned conditions. As shown, the temperature of the first automotive vehicle is quickly dropped to the adequate temperature within the comfort zone relative to the second automotive vehicle when the automotive vehicle has been changed from a parking condition to a driving condition. Characters P1, P2 indicate the differences of the cooling down performance between the first and second automotive vehicle, and more particularly, P1 indicates the difference in the room air temperature while P2 indicates the difference at the instrument cluster temperature.

Since the thus arranged controlling system controls the transmissivity $\phi$ of the vehicular window glasses 2, 4, 6, 8 throughout all four seasons, cooling down performance of an air conditioner is largely improved by the system according to the present invention as compared with a conventional window glass transmissivity control system.

Furthermore, in summer, the thus arranged system prevents an instrument cluster, seats and the like of the vehicle from degrading in their physical properties under heating by the solar energy. Additionally, the system according to the present invention prevents the inside of the passenger room from becoming out of sight by the glasses in the night.

## Claims

1. A system for controlling transmissivity of a window glass for an automotive vehicle, the window glass having a variable transmissivity, the system comprising:

an outside air temperature sensor (12) for detecting a first air temperature ($T_A$) outside the vehicle;

a room air temperature sensor (14) for detecting a second air temperature (Ti) within a passenger room of the vehicle;

means (18) for judging that an ignition switch of the vehicle is turned OFF:

means (19a) for setting a comfort zone in accordance with the first air temperature ($T_A$);

means (19b) for comparing the second temperature (Ti) with the said comfort zone; and

means (19c) for controlling the transmissivity of the window glass in accordance with the comparison of the comparing means (19b) when the judging means (18) senses that the ignition switch is turned OFF.

2. A system as claimed in claim 1, further comprising a solar energy sensor (16) which measures a solar radiation amount, wherein the said transmissivity is increased when the solar energy sensor (16) senses that solar radiation amount is zero.

3. A system as claimed in claim 1 or 2, further comprising means for setting a summer mode and a winter mode which are defined in accordance with the first air temperature ($T_A$).

4. A system as claimed in claim 3, wherein the said comfort zone is selected from a first comfort zone and a second comfort zone which respectively correspond to the summer mode and the winter mode.

5. A system as claimed in any preceding claim, wherein the comparing means (19b) comprises means for selecting one of first, second, and third conditions, the first condition being selected when the second air temperature (Ti) is within the said comfort zone, the second condition being selected when the second air temperature (Ti) is lower than a lowest level within the said comfort zone, and the third condition being selected when the second air temperature (Ti) is higher than a highest level within the said comfort zone.

6. A system as claimed in claim 5, wherein the controlling means (19c) accomplishes first, second, and third controls, the first control maintaining a given transmissivity when the second air temperature (Ti) is in the first condition, the second control decreasing the transmissivity when the second air temperature (Ti) is in the second condition, and the third control increasing the transmissivity when the second air temperature (Ti) is under the third condition.

# FIG.1

OUTSIDE AIR TEMP. SENSOR *12*

ROOM AIR TEMP. SENSOR *14*

IGNITION SWITCH JUDGING MEANS *18*

COMFORT ZONE SETTING MEANS *19a*

COMPARING MEANS *19b*

CONTROLLING MEANS *19c*

WINDOW GLASS *2,4,6,8*

*S*

*19*

EP 0 411 879 A2

# FIG.2

# FIG.3

# FIG.4

CONTROL UNIT

# FIG.5

START

S1 IGNITION SWITCH OFF? — NO

YES

S2 Qs:0 — =0 kcal/h

S3 φ → LARGER

>0 kcal/h

S4 TA:a°C — ≦a°C

>a°C

S5 B°C≦Ti≦A°C  Ti

S6 φ → CONST

Ti>A°C

S7 φ → SMALLER

S8 Ti<B°C  φ → LARGER

S9 D°C≦Ti≦C°C  Ti

S11 φ → SMALLER

Ti>C°C

S10 φ → CONST

S12 Ti<D°C  φ → LARGER

S13 RETURN

7

# FIG.6

TA
(°C)

a°

WINTER
MODE

SUMMER
MODE

# FIG.7

COMFORT ZONE

B°   A°

Ti(°C)

# FIG.8

COMFORT ZONE

D°   C°

Ti(°C)

# FIG.9